# EUROPEAN PATENT APPLICATION

(11) **EP 4 439 030 A1**
(43) Date of publication of application: **02.10.2024**
(21) Application number: 23220113.7
(22) Date of filing: 22.12.2023
(51) Int. Cl.: G01L 5/28, F16D 66/00, G01M 17/007

(54) **FLOATING PLATE BRAKE METER WITH WEIGHT MEASUREMENT**

(30) Priority: 30.03.2023 ES 202330547
(71) Applicant: Teknika Bereziak, S.L., 48300 Gernika (ES)
(72) Inventor: Baltasar Varela, Rafael, 48600 Gernika (ES)
(74) Representative: Izquierdo Blanco, Maria Alicia

(57) **Abstract**

Plate brake meter (1) with floating support that consists of a mobile support (3) on which the die-cut plate (2) is held, which is supported at its two ends on the transverse input support (4a) and the transverse output support (4b), each transverse support having at least one sensor (6) attached.

## Description

### Field of the invention

This invention concerns a Plate Brake Meter, one of those used in lines to check vehicle safety elements such as in vehicle repair workshops with pre-ITV (Spanish acronym for Technical Vehicle Inspection) inspection and that accurately measures the general condition of the brakes of a vehicle's wheels.

### Prior state of the art

Currently, and as a reference to the state of the art, plate brake meters are known that allow the brake system of a vehicle to be measured using a dynamic test. These brake meters consist of a set of 2 or 4 free-sliding plates connected to precision dynamometers capable of measuring the forces generated during braking under any conditions, independently on each wheel. These brake meters are built for surface mounting or built-in installation.

The accuracy of plate brake meters depends on the free sliding of the plates, which, in turn, have to support the weight of the vehicle. Usually, the plates consist of a mobile upper part that moves on a lower part anchored to the ground; a system is installed between the upper and lower parts so that the upper part can move freely, either using ball bearings or any other method that ensures that it can slide freely with minimum rolling resistance. The measuring dynamometers are installed between both the upper and lower plates.

These types of fixed frames, common in plate brake meters, make it impossible to read the **weight** of the vehicle since they can only read forces in a horizontal direction. Obviously, reading the vertical component (weight) is crucial to determine the **effectiveness** of the braking forces, since these have to be proportional to the mass of the vehicle that is to be stopped (braked).

There are brake meters that measure the weight of the vehicle. In order to measure the weight, the sensors (gauges) are positioned in such a way that the entire load is conveyed to them, thereby obtaining a static weight reading of the vehicle.

### Explanation of the invention and advantages

In light of this state of affairs, the present invention refers to a plate brake meter (1) with floating supports that consists of an Upper Part with movement capacity or mobile support (3) mounted on several sensors that are expected to be 2 double dynamometers (4 weight sensors (6)) located at their ends, of which the first, at the vehicle entrance, that is, the dynamic sensor bar (8), is fixed to the lower frame or transverse input support (4a), and it also incorporates the horizontal pull sensor (6) to measure the braking force, while the second (located at the exit or end part of the plate) is movable using bearings (4c) and guides. This assembly is not exclusive and can be reinforced for large vehicle weights with another 2 weight sensors in the central part of the upper sliding plate or mobile support (3) that prevent deformations or buckling of the mobile upper part.

This upper part (mobile support (3)) is supported by the sensors on two metal plates anchored to the ground (transverse input (4a) and output (4b) supports), on which the measurement system floats. This support configuration on only 4 points at both ends allows for better placement of dynamic load sensors, there being no distortion of the data measured by the sensors as the vehicle load is not distributed over the entire surface, but is instead located at the support points, coinciding with the location of the sensors. It is foreseen that the two weight sensors and the braking sensor shall be placed at the entrance of the vehicle to the system and two weight sensors at the exit, although this arrangement refers to a preferential and non-limiting presentation. In addition to determining the effectiveness of the brakes, it also allows the behaviour of the vehicle's suspended mass to be measured using the vertical component, thereby establishing whether the work of the shock absorber system, stabilisers, etc. is correct, all without the horizontal component losing braking forces.

Furthermore, the die-cut plate (2) is between 3 mm and 9 mm thick, thereby ensuring that the loads will be correctly conveyed to the sensors, thus obtaining dynamic measurements that are very close to real operating conditions.

When the brake meter is anchored to the floor using two independent bases, the transverse input support (4a) being integral with the input base (7a) and the transverse output support (4b) being integral with the output base (7b), both transportation and installation and levelling of the brake meter are much easier and can be done without the use of special machinery.

The brake and weight sensors (6) are connected to the dynamic sensor bar (8) that is housed on the sensor protection (5); this allows a combined reading of the vehicle's response reactions to be obtained, including where the vehicle is equipped with electronic braking systems, making it possible to establish whether the response of this electronic braking system is appropriate to the forces exerted.

In addition, the sensors (6) are protected by the sensor protection (5), ensuring their integrity against accidents such as impacts, bad manoeuvres, etc. that may occur in the environment of the workshop in which they are installed.

In its structure, the mobile support (3) consists of at least two transverse frames (3a) and two longitudinal frames (3b); this allows a compromise between rigidity and weight of the mobile support (3) to be obtained, thereby ensuring that its buckling is within the admissible margins and at the same time maintains an adequate weight ratio for its transport and installation by operators without the need to resort to machinery. This reinforcement of the plates to strengthen the whole can be increased as required.

Additionally, the outer face of the die-cut plate (2) has an embossment on its surface to ensure the grip of the tires, thereby avoiding slippage and making the test conditions similar to those that would be experienced on the asphalt.

### Drawings and references

To better understand the nature of the invention, the attached drawings depict an industrial embodiment that is merely an illustrative and non-limiting example.

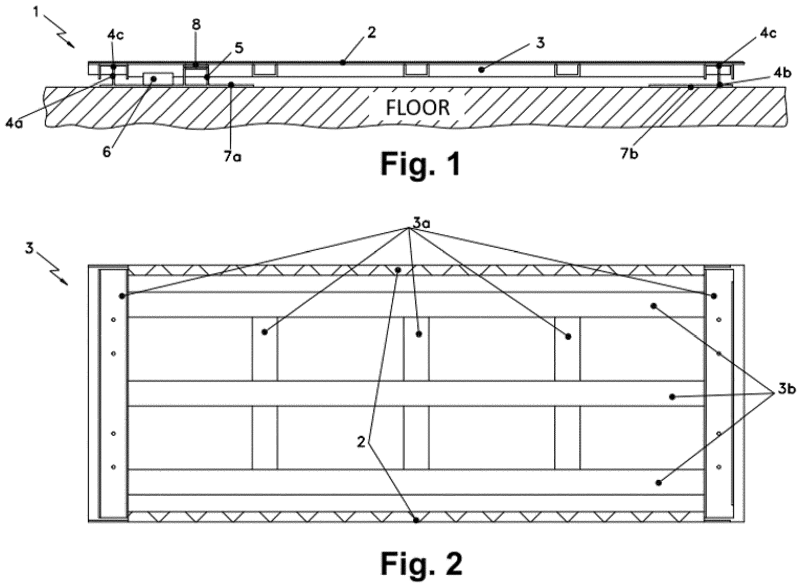

Figure 1 shows a longitudinal section illustrating the plate brake meter (1) with floating support.
Figure 2 shows a bottom view of the mobile support (3)

The following references are indicated in these figures:
- 1.: Plate brake meter.
- 2.: Die-cut plate.
- 3.: Mobile support.
3a. Transverse frame
3b. Longitudinal frame
- 4.: Transverse support.
4a. Transverse input support
4b. Transverse output support
4c. Bearings
- 5.: Sensor protection.
- 6.: Sensors.
- 7.: Brake meter base.
7a. Input base
7b. Output base
- 8.: Dynamic sensor bar.

### Presentation of a preferred embodiment

Concerning the drawings and references listed above, a preferred mode of execution of the object of the invention is illustrated in the attached drawings, referring to a plate brake meter (1) with floating support that is supported by a mobile support (3), which is made up of longitudinal (3b) and transverse frames (3a), on which the die-cut plate (2) on which the vehicle will brake is mechanically fastened. The mobile support (3) is supported at both ends on the transverse input (4a) and output (4b) supports, with a height of between 25 mm and 75 mm. This support of the mobile support (3) on the transverse input and output supports (4a, 4b) is carried out by means of bearings (4c) that are only located at these support points. This configuration of floating support exclusively on two ends allows the dynamic load sensors to be placed at the points of maximum load, this not being dispersed due to the existence of bearings on the rest of the plate's surface.

The die-cut plate (2) that is held on the mobile support (3) is between 3 mm and 9 mm thick, thereby ensuring that the loads will be distributed evenly to the mobile support (3) and will be correctly conveyed to the sensors, thus obtaining dynamic measurements identical to real road operating conditions.

The anchoring of the brake meter to the floor using two independent bases: the input base (7a), placed at the entrance to the brake meter, and the output base (7b). In conjunction with the bases, the transverse supports receive the load from the brake meter (once detected by the sensors (6)) and convey it, using the floor's base, the transverse input support (4a) being integral with the input base (7a) and the transverse output support (4b) integral with the output base (7b). By having independent bases, both transportation and installation and levelling of the brake meter are much easier and can be done without the use of additional elements such as cranes or forklifts.

The pull and weight sensors (6) are connected to the dynamic sensor bar (8) that is housed on the sensor protection (5); this dynamic sensor bar (8) detects movements and forces (both weight and braking) that are exerted on the die-cut plate (2). This provides a combined reading of the vehicle's response reactions to braking, including if the vehicle may be equipped with electronic braking systems. If the vehicle is equipped with electronic braking systems, the sensors detect the moment at which the system comes into operation and the forces that intervene at that moment, thus being able to establish whether this electronic braking system's response is appropriate and acts at the specific moment for which it has been designed or, on the contrary, one or more of the parameters deviate to some degree. Furthermore, weight sensors (6) are intended to be placed on the output support, making it possible to read the vehicle's static weight.

The sensors (6) are protected by the sensor protection (5), ensuring their integrity against accidents such as impacts, bad manoeuvres, etc. that may occur in the environment of the workshop in which they are installed.

The mobile support (3) is made up of at least two transverse frames (3a) and two longitudinal frames (3b); this allows a compromise between rigidity and weight of the mobile support (3) to be obtained, ensuring, on the one hand, minimum buckling, within the admissible margins, and on the other hand, maintaining an adequate weight ratio for its installation by the installers without the need to resort to machinery, thus adapting to spaces in which, given the existence of other elements already installed, such as elevators or pits, access by heavy machinery would not be possible.

Additionally, the outer face of the die-cut plate (2) has an embossment on its surface, thereby ensuring the grip of the tires, preventing slipping and making the test conditions similar to those that would be experienced on the asphalt, ensuring that the brake meter gives a proper measurement.

## Claims

1. Plate brake meter (1) with floating support **characterised in that** it consists of a mobile support (3) on which the die-cut plate (2) is held, which is supported at both ends on the transverse input support (4a) and the transverse output support (4b), each transverse support having at least one sensor (6) attached.

2. Plate brake meter (1) with floating support according to claim 1, **characterised in that** the die-cut plate (2) is between 3 mm and 9 mm thick.

3. Plate brake meter (1) with floating support according to all of the previous claims, **characterised in that** the height of the transverse input support (4a) and the transverse output support (4b) is between 25 mm and 75 mm.

4. Plate brake meter (1) with floating support according to all of the previous claims, **characterised in that** the transverse input support (4a) is integral with the input base (7a) and the transverse output support (4b) is integral with the output base (7b).

5. Plate brake meter (1) with floating support according to all of the previous claims, **characterised in that** the dynamic sensor bar (8) is housed on the sensor protection (5).

6. Plate brake meter (1) with floating support according to all of the previous claims, **characterised in that** the sensors (6) are protected by the sensor protection (5).

7. Plate brake meter (1) with floating support according to all of the previous claims, **characterised in that** the mobile support (3) consists of at least two transverse frames (3a) and two longitudinal frames (3b).

8. Plate brake meter (1) with floating support according to all of the previous claims, **characterised in that** the outer face of the die-cut plate (2) has an embossment on its surface.
